# EUROPEAN PATENT APPLICATION

(11) **EP 1 079 381 A2**
(43) Date of publication of application: **28.02.2001**
(21) Application number: 99122208.4
(22) Date of filing: 06.11.1999
(51) Int. Cl.: G11B 7/26

(54) **Optical information recording medium provided with visual watermark, apparatus and method for making the visual watermark**

(30) Priority: 23.08.1999 JP 23542199
(71) Applicant: Toshiba-Emi Limited, Minato-ku, Tokyo 107-0052 (JP)
(72) Inventor: Hirofumi, Iwai, c/o Toshiba-Emi Limited, Gotenba-shi, Shizuoka 412-0046 (JP)
(74) Representative: Kaminski, Susanne, Dr.

(57) **Abstract**

This invention relates to an optical information recording medium provided with a visual watermark comprising pits 5 in a form of a concave carrying information signals and lands 6 in a form of a convex, the pits and the lands being alternately formed in rows on the recording medium. There is provided an optical disk characterized in that in the land 6 between the adjacent pits 5 are formed recesses 7 which are less deep than the pits, a group of the recesses 7 representing a visual pattern. The present invention can achieve an effect that the pits 5 of the recording signal and the recesses 7 for the watermark can be formed at the same time by the same laser recording device.

## Description

### BACKGROUND OF THE INVENTION

### Field of the Invention

This invention relates to an optical information recording medium such as an optical disk which is provided with a visual watermark, and an apparatus and a method for forming the visual watermark.

### Description of the Related Art

As one of the conventional methods for permitting a macroscopic visual observation of letters and/or pictures on a recording face of the optical disk, there has been known a technique that information display pits are provided between recording tracks so that the letter information etc. may come out, as disclosed in Japanese Patent publication No. 8-167170 of an unexamined application.

In Japanese Patent publication No. 10-502203 of an unexamined application, is also disclosed such a method as a photoresist is exposed to light again with a mask of letters and/or pictures attached, after the pits have been formed by means of a laser recording device, thereby changing heights of lands on the recording face.

However, according to the method of Japanese Patent Publication No. 8-167170 of the unexamined application, it has been necessary to provide a plurality of laser beams on the recording device, each of which is precisely irradiated on a glass master, and also to prepare separately both a signal recording modulator and a pattern recording modulator. Therefore, a new type of a glass master recording device must be manufactured in order to conduct this method, because the ordinary recording device for the glass master is inappropriate to realize the method. Further, a digital versatile disk (DVD), which is a recently prevailing medium, has a high density of pits, and therefore, it is technically difficult to accurately insert other pits between rows of the pits.

On the other hand, according to the method of Japanese Patent Publication No. 10-502203 of the unexamined application, it has been necessary to expose a pattern to light by means of a separate device after the pits have been formed by means of the laser recording device. This has such problems that steps of manufacturing the glass master will be increased, that it is difficult to control depth of the pits on occasion of exposing the pattern to the light, and that exposing too much to the light would result in a trouble during reproduction.

### SUMMARY OF THE INVENTION

In view of the above problems, it is an object of the present invention to provide an optical information recording medium provided with a visual watermark which can perform both recording of the signal and recording of the watermark simultaneously, and an apparatus and a method for forming the visual watermark.

In order to achieve the above described object, there is provided according to a feature of this invention, an optical information recording medium provided with a visual watermark comprising pits in a form of a concave carrying information signals and lands in a form of a convex, said pits and said lands being alternately formed in rows on said recording medium, characterized in that in the land between said pits are formed recesses which are less deep than said pit, a group of said recesses representing a visual pattern.

According to another feature of the invention, the optical information recording medium is in a form of a disk.

According to a further feature of the invention, the optical information recording medium is in a form of a card.

There is further provided according to the invention, an apparatus for forming a visual watermark on an optical information recording medium which comprises means for converting a pit signal to a pit forming signal corresponding to a determined depth of pits, means for converting a watermark signal to a watermark forming signal corresponding to a depth of recesses for a watermark which is less deep than said pit depth, and means for combining said pit forming signal and said watermark forming signal.

There is further provided according to the invention, a method of forming a visual watermark on an optical information recording medium comprising steps of converting a pit signal to a pit forming signal corresponding to a determined pit depth, converting a watermark signal to a watermark forming signal corresponding to a depth of recesses for a watermark which is less deep than said pit depth, combining said pit forming signal and said watermark forming signal, and recording said visual watermark by a laser light modulated on the basis of said combined signal.

The above and other objects, features and advantages of the present invention will become more apparent from the following detailed description of a preferred embodiment taken in connection with the accompanying drawings.

### BRIEF DESCRIPTION OF THE DRAWINGS

Fig. 1 is an enlarged perspective view of a part of the recording area of the optical disk according to one embodiment of the invention;
Fig. 2 is a plan view of the optical disk formed with a pattern of a visual watermark according to the embodiment of the invention;
Fig. 3 is a view showing a signal waveform supplied to an optical modulator for controlling a writing laser light according to the embodiment of the invention;
Fig. 4 is a block diagram showing an apparatus for forming a visual watermark according to the embodiment of the invention wherein both signal pits and watermark pits are formed simultaneously; and
Fig. 5 is a view showing waveforms of signals in Fig. 4.

### DESCRIPTION OF THE PREFERRED EMBODIMENT

Now, an embodiment of the present invention will be described in detail referring to the drawings.

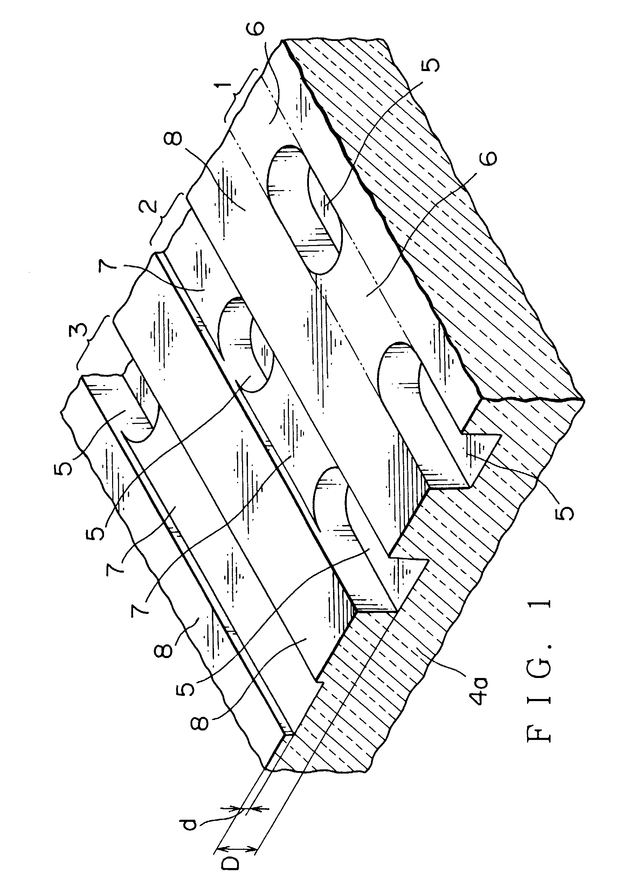

Fig. 1 is a perspective view of a part of the recording area of the optical disk according to one embodiment of the invention in an enlarged scale. It is to be noted that Fig. 1 shows only a transparent substrate 4a immediately after molded, with a reflection layer, a protective layer, etc. omitted in the drawing. The glass master after treated by a developing process will also present a similar form.

As shown in Fig. 1, on the recording area of the transparent substrate 4a of the optical disk, are formed a first recording track 1, a second recording track 2, and a third recording track 3 interposing between the track lands 8.

A plurality of signal pits 5 which are information pits for recording a program information of music or the like, and a plurality of lands 6 between the signal pits 5 (between the pit land) are formed in the first recording track 1 alternately in rows.

In the second recording track 2, in areas of the between the pit lands between the signal pits 5 are formed recesses 7 which constitute a watermark and have a depth d of, for example, one-tenth of the depth D of the signal pit 5.

Also in the third recording track 3, in an area of the between the pit land between the signal pit 5 and another pit which is not shown is formed a recess 7 which constitutes the watermark and has a depth d of, for example, one-tenth of the depth D of the signal pit 5.

The recesses 7 are arranged in such a manner that a group of the recesses 7 represents a visible pattern as the visual watermark pattern.

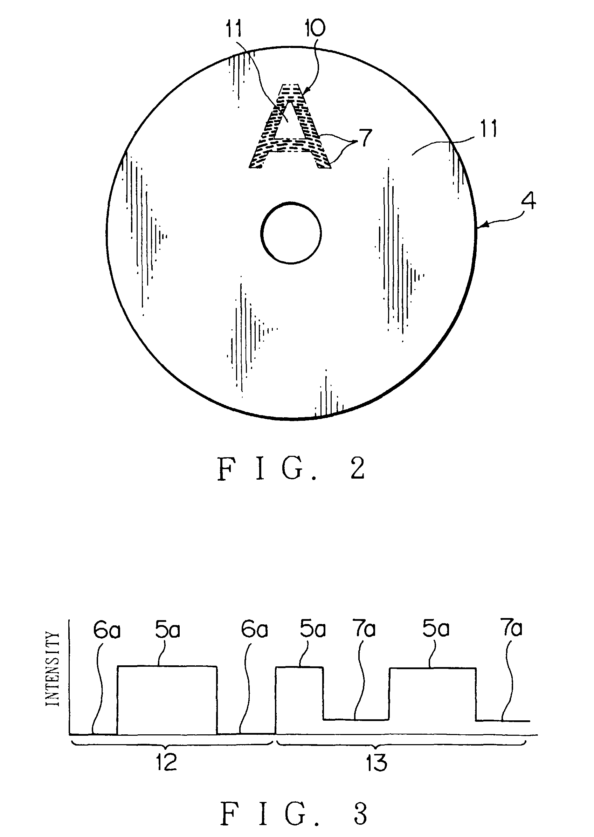

Fig. 2 is a plan view of the optical disk on which the visual watermark pattern is formed.

As shown in Fig. 2, the group of the recesses 7 represents the visible pattern (a letter A in the drawing) as the visual watermark pattern 10. In this case, the recesses 7 which constitute the watermark may be gathered inside lines composing the pattern A, while an area 11 outside the lines is free from the recesses as shown in Fig. 2, but alternatively, the recesses may be gathered in the area 11 outside the lines composing the pattern A while the area inside the lines is free from the recesses.

Fig. 3 shows waveforms of a signal transmitted to an optical modulator for controlling the writing laser beam in which a waveform of a writing signal in the signal pit zone is compared with a waveform of a writing signal in the watermark zone.

As shown in Fig. 3, in the waveform 12 of the writing signal in the signal pit zone, 5a represents an intensity required for forming the signal pit 5 of a determined depth, and 7a represents an intensity for forming a determined depth of the recess 7 for the watermark which has a less depth than the signal pit. 6a corresponds to the land 6 between the pits.

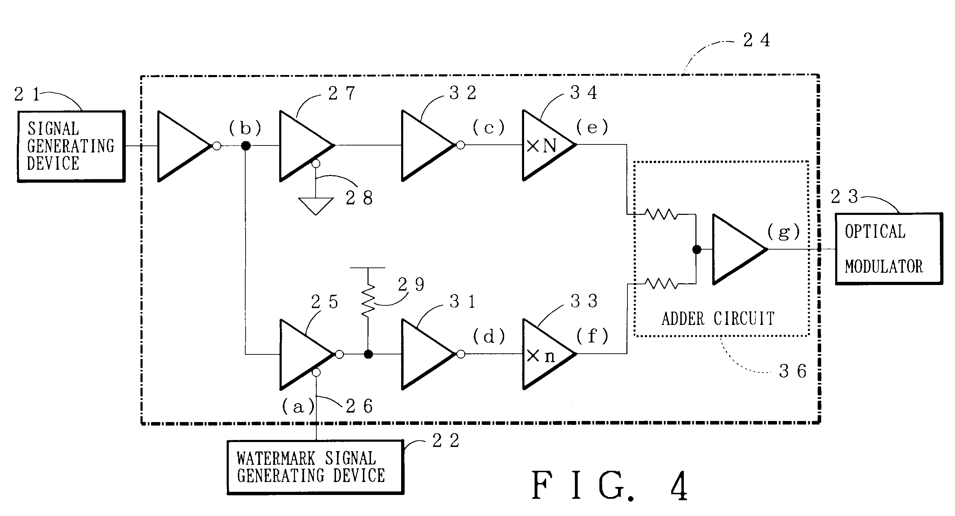

Fig. 4 is a block diagram showing a device for forming the visual watermark by means of which the signal pits and the watermark pits can be simultaneously formed.

As shown in Fig. 4, the apparatus for forming the visual watermark comprises a signal generating device 21, a watermark signal generating device 22, a watermark creating circuit 24 which combines the recording signal from the signal generating device 21 and the watermark signal from the watermark signal generating device 22, and an optical modulator 23 which is inputted with the combined signal and supplies an actuating signal for writing to a laser device which is not shown. The laser device may employ laser beams to which the photoresists are sensitive, such as an argon laser, a He-Cd laser, a krypton laser, a semiconductive laser, etc.

The signal generating device 21 generates signals for CD on the basis of signals from a music source or from a subcoding signal generator which is not shown.

The watermark signal generating device 22 generates watermark signals which will make the visible pattern.

The watermark creating circuit 24 combines the recording signals from the signal generating device 21 and the watermark signals from the watermark signal generating device 22.

This watermark creating circuit 24 has a buffer 27 for regulating an amount of delay of the CD signal from the signal generating device 21, an inverter 32 for inverting an output from the buffer 27, a pit depth regulating multiplier 34 for regulating an output from the inverter 32, an inverter 25 for overlaying the watermark signal from the watermark signal generating device 22 on the CD signal (recording signal) through a trigger input 26, an inverter 31 for inverting an output from the inverter 25, a watermark recess depth regulating multiplier 33 for inputting and regulating an output from the inverter 31, and an adder circuit 36 for performing an analog addition of an output from the pit depth regulating multiplier 34 and an output from the recess depth regulating multiplier 33. The output from the adder circuit 36 is applied to an input of the optical modulator 23. In Fig. 4, numeral 28 represents a ground and 29 represents a pull-up resistor.

The CD signal is a signal obtained through EFM modulation (eight to fourteen modulation) from a row of quantized pulses after signs related with the signal pulses have been added, and the signs have been interleaved.

A pit depth regulating factor xN in the pit depth regulating multiplier 34 is appropriately determined by the nature of the photoresist (property, sensitivity), sensitivity of the laser beam, etc.

A recess depth regulating factor xN in the recess depth regulating multiplier 33 is set within a range in which a recess having such a depth as required for forming the visual watermark (a lower limit of the recess depth) and as giving no influence on the reproduction of the signal pit (an upper limit of the recess depth) can be formed.

The optical modulator 23 is inputted with the signal combined in the watermark creating circuit 24 to modulate the writing laser beam. As this optical modulator 23, an electro-optic element, or an acousto-optic element can be used.

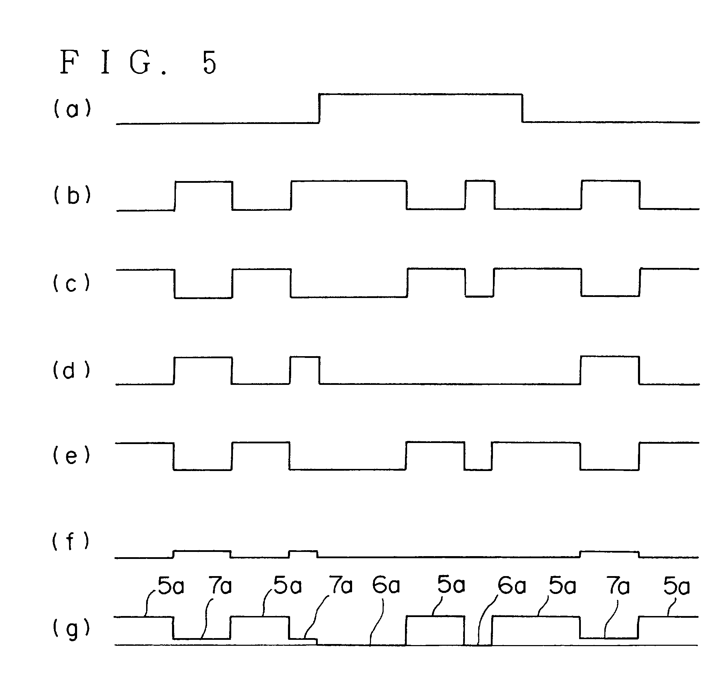

Fig. 5 shows waveforms of the signals in Fig. 4.

In Fig. 5, (a) shows a waveform of the watermark signal, (b) shows a waveform of the recording signal of Fig. 4(b), (c) shows a waveform of an inverted recording signal inverted from the recording signal, (d) shows a waveform of an intermediate processing signal inverted from the signal limited by the watermark, (e) shows a waveform of the inverted recording signal varied in level (almost invaried in this case), (f) shows a waveform of the intermediate processing signal varied in level (lowered in level in this case), and (g) shows a waveform of the output signal applied to the optical modulator.

In the output signal in Fig. 5(g), 5a corresponds to the pit of the recording signal, 7a corresponds to the recess for the watermark, and 6a corresponds to the land.

According to the above described embodiment, the same laser recording device can form both the pits for the recording signal and the recesses for the watermark at the same time.

In manufacturing the optical disk, to the modulating signal applied to the recording laser beam modulator in the glass master recording device, is added the signal for the visual watermark, and in addition to the ordinary pits and lands, are formed the shallow recesses (The depth of about one-tenth of the pit depth is sufficient to visually observe the watermark. The depth can be optionally set within a range in which the reproduction will not be influenced.) in the areas of the lands between the pits in the rows of the pits, thereby to realize the watermark in a form of letters or pictures which can be visually confirmed.

The present invention is applicable to all the optical disks such as LD, CD, DVD, etc. provided that the pits have been formed thereon, and can present a most appropriate measure especially for the DVD of which widespread use is anticipated in future.

Because the pattern can be formed over the existing pits without forming a new row of pits between the pits, the laser recording device presently in use can realize the invention only by reforming a part of the recording device.

The glass master can be directly forwarded to a manufacturing process of a metal master after the developing process, because the pattern is formed simultaneously with the laser recording, and hence the working steps will not be increased.

Because the watermark signal can be directly applied to the modulator in the laser recording device, a ratio between the depths of the pits and the recesses for the watermark can be controlled by means of the ratio between the signals.

In the above described embodiment, an entire land area between the adjacent pits in the row of the pits is formed to make the recess, but it is optional to make the recess only in a part of the land.

Although the rows of the pits in the recording track are spiral-shaped in this embodiment, the present invention is easily applicable when the rows of the pits are concentric.

Although the recording medium in a form of a disk has been described in the embodiment, it may be in a form of a card, and the row of the pits may be formed linearly within the scope of this invention.

The present invention can achieve an effect that the pits of the recording signal and the recesses for the watermark can be formed at the same time by the same laser recording device. In other words, the pits for the recording signal and the recesses for the watermark can be formed by employing the common laser recording device.

Further, the invention is most suitable to high density recording on the DVD or the like, because the watermark can be formed in the land over the rows of the pits.

Since it is not necessary to expose the glass master again to the light in order to form the watermark pattern, the manufacturing steps of the glass master will not be increased, and the depth of the pits can be easily controlled.

It is to be noted that this invention will not be restricted to the above described embodiment, but may include various modifications within a scope of the concept of the invention.

## Claims

1. An optical information recording medium provided with a visual watermark comprising pits in a form of a concave carrying information signals and lands in a form of a convex, said pits and said lands being alternately formed in rows on said recording medium, characterized in that in the land between adjacent said pits are formed recesses which are less deep than said pit, a group of said recesses representing a visual pattern.

2. The optical information recording medium provided with a visual watermark as claimed in claim 1, wherein said optical information recording medium is in a form of a disk.

3. The optical information recording medium provided with a visual watermark as claimed in claim 1, wherein said optical information recording medium is in a form of a card.

4. An apparatus for forming a visual watermark on an optical information recording medium which comprises means for converting a pit signal to a pit forming signal corresponding to a determined pit depth, means for converting a watermark signal to a watermark forming signal corresponding to a depth of recesses for a watermark which is less deep than said pit depth, and means for combining said pit forming signal and said watermark forming signal.

5. A method of forming a visual watermark on an optical information recording medium comprising the steps of converting a pit signal to a pit forming signal corresponding to a determined pit depth, converting a watermark signal to a watermark forming signal corresponding to a depth of recesses for a watermark which is less deep than said pit depth, combining said pit forming signal and said watermark forming signal, and recording said visual watermark by a laser beam which is modulated on the basis of said combined signal.
